# EUROPÄISCHE PATENTSCHRIFT

(11) **EP 1 329 137 B1**
(45) Veröffentlichungstag und Bekanntmachung des Hinweises auf die Patenterteilung: **29.11.2006**
(21) Anmeldenummer: 00979512.1
(22) Anmeldetag: 26.10.2000
(51) Int. Cl.: H05B 7/148

(54) **AUTOMATISCHER ELEKTRODENREGLER AUF DER GRUNDLAGE DER DIREKTEN LEISTUNGSFAKTORREGULIERUNG UND ENTSPRECHENDES VERFAHREN**
AUTOMATIC ELECTRODE REGULATOR BASED ON DIRECT POWER FACTOR REGULATION AND CORRESPONDING METHOD
REGULATEUR D'ELECTRODES AUTOMATIQUE SUR LA BASE DE LA REGULATION DIRECTE DU FACTEUR DE PUISSANCE ET PROCEDE CORRESPONDANT

(30) Priorität: 26.09.2000 US 669582
(43) Veröffentlichungstag der Anmeldung: 23.07.2003
(73) Patentinhaber: SMS Demag AG, 40237 Düsseldorf (DE)
(72) Erfinder: SCHREITER, Till, A., Johannesburg 2196 (ZA); EIERMANN, Jörg, Pittsburgh, PA 15237 (US)
(74) Vertreter: Valentin, Ekkehard
(86) Internationale Anmeldenummer: PCT/EP2000/010543
(87) Internationale Veröffentlichungsnummer: WO 2002/028146

(56) Entgegenhaltungen:
- US-A- 3 435 121
- US-A- 3 662 075
- US-A- 4 096 344
- US-A- 4 620 308
- US-A- 5 255 285

## Beschreibung

Die vorliegende Erfindung betrifft Elektrolichtbogenöfen und besonders ein Kontrollsystem und ein Verfahren zur Kontrolle der Elektroden in Elektrolichtbogenöfen auf der Grundlage der direkten Leistungsfaktorregulierung.

### Beschreibung des Stands der Technik

Typischerweise wird der elektrische Lichtbogen und daher die Leistungsaufnahme von einem Elektrolichtbogenofen entweder durch die manuelle oder die automatische Kontrolle der Anordnung der Elektroden im Elektrolichtbogenofen reguliert. Um jedoch einen ständigen Betrieb des Elektrolichtbogenofens bereitzustellen, wird die automatische Regulierung der Elektroden bevorzugt. Besonders wird der elektrische Lichtbogen oder die Lichtbogenlänge der Elektrode durch die Kontrolle der Anordnung der Elektrode bezüglich dem Stand des geschmolzenen Metalls kontrolliert, das im Elektrolichtbogenofen enthalten ist. Verschiedene Arten von Elektrodenregulierungssystemen sind in der Technik bekannt, wie z.B. Stromregulierungssysteme, Impedanzregulierungssysteme, Widerstandsregulierungssysteme und Leistungsregulierungssysteme. Impedanzregulierungssysteme sind die in der Industrie am weitesten verbreiteten und am besten eingeführten Systeme. In Impedanzregulierungssystemen ist es üblich, den Strom und die Spannung der Elektroden zu messen, um die Elektrodenimpedanz zu bestimmen. Die Elektrodenimpedanz als eine Prozeßeingabe wird dann mit einem theoretischen Impedanzwert verglichen, um einen gleichbleibenden Lichtbogen oder eine gleichbleibende Lichtbogenlänge beizubehalten.

Ein hauptsächlicher Nachteil beim Impedanzregulierungssystem liegt darin, daß ein "bestmöglicher" Leistungsfaktor und somit bestmögliche Arbeits-/Betriebsbedingungen des Elektrolichtbogenofens in der Praxis schwer zu erreichen und beizubehalten sind. Dies ist vor allem auf die inhärente Komplexität und auf die zeitraubenden Anstrengungen zurückzuführen, die zur Einstellung des theoretischen Impedanzwertes auf den erforderlichen "bestmöglichen" Leistungsfaktor der Elektrode erforderlich sind. Zusätzlich ist die theoretische Impedanz ein gleichbleibender Wert und berücksichtigt die sich häufig verändernden Bedingungen im Elektrolichtbogenofen, die ständige Einstellungen der theoretischen Impedanz erfordern, nicht. Bestmögliche Arbeits-/Betriebsbedingungen werden in Elektrolichtbogenöfen, die Impedanzregulierungssysteme verwenden, typischerweise nie erreicht. Ein typisches Impedanzregulierungssystem für Elektroden in einem elektrischen Ofen wird vom US-Patent 5,255,285 an Aberl et al. (nachfolgend "das Aberl-Patent") offenbart.

Das Aberl-Patent offenbart im allgemeinen ein Kontrollsystem für einen Elektrolichtbogenofen auf der Grundlage der Impedanz, das einen Elektrodenaktuator, ein Steuergerät zur Kontrolle des Elektrodenaktuators auf der Grundlage der Elektrodenimpedanz und einen Impedanzsignalgeber umfaßt, in dem die Elektrodenimpedanz berechnet wird. Das Steuergerät wird dazu verwendet, um die Elektrodenimpedanz mit dem gewünschten Impedanzwert zu vergleichen. Das Impedanzregulierungssystem, das vom Aberl-Patent offenbart wird, versucht, die inhärenten Schwächen mit Impedanzregulierungssystemen zu überwinden, indem dem Steuergerät ein Rückführungskreis oder ein "Korrektur"-Signal bereitgestellt wird. Das "Korrektur"-Signal ist jedoch nichts anderes als ein indirektes Maß der Elektrodenimpedanz mit einer Toleranz für den Widerstand und die induktive Reaktanz einer elektrischen Leitung, die mit dem Ofentransformator des Elektrolichtbogenofens verbunden ist, und trägt somit wenig dazu bei, um die Leistung des gesamten Kontrollsystems zu verbessern. Impedanzartige Elektrodenregulierungssysteme sind gewöhnlich zeitraubende und ineffiziente Verfahren zur Kontrolle von Elektroden in Elektrolichtbogenöfen.

Wie oben besprochen, können Elektrodenregulierungssysteme auf Kriterien wie Strom, Impedanz und Widerstand basieren. Diese Werte sind jedoch nur indirekte Messungen, die indirekte Information über die Leistungsaufnahme der einzelnen Elektroden bereitstellen. Der wichtigste Wert oder das wichtigste Kontrollkriterium, das eine Überprüfung erfordert und gewöhnlich nach dem Stand der Technik nicht beachtet wird, ist der Elektrodenleistungsfaktor.

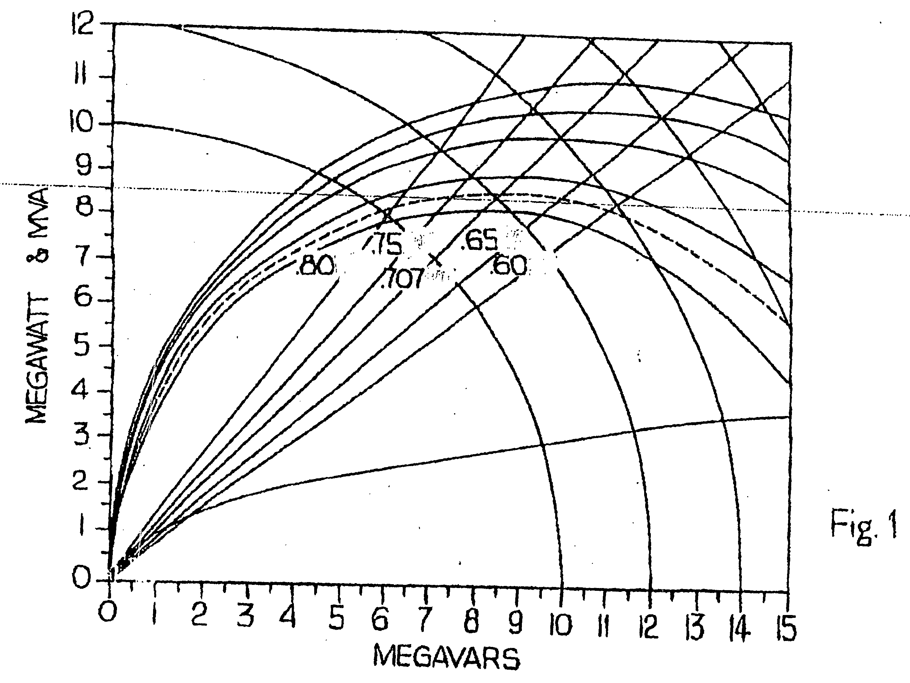

Fig. 1 zeigt, wie der Betriebs- oder "Zweit"-Strom, die Betriebs- oder Zweitspannung, die Impedanz und die Leistungsaufnahme von Elektrolichtbogenöfen miteinander zusammenhängen. Fig. 1 ist ein Kreisdiagramm der Betriebsspannung gegen den Betriebsstrom und zeigt die Leistungsfaktorwerte für fünf Leistungsfaktorsollwerte. Während der normalen Betriebsbedingungen sollte die Leistungsaufnahme maximiert und der Elektrodenverbrauch minimiert werden. Die Bogenlänge sollte stabil sein, und Überströme sollten vermieden werden. Das Kreisdiagramm von Fig. 1 zeigt, daß die maximal verfügbare Leistung bei einem Leistungsfaktor von cos α = 0,707 auftritt. Die maximale Leistungsaufnahme führt jedoch nicht notwendigerweise zu einer maximalen Aufheizgeschwindigkeit oder zu dem bestmöglichen Betrieb des Ofens, wenn andere Faktoren, wie z.B. der Elektrodenverbrauch oder die Kohlenstoffaufnahme berücksichtigt werden. Aus diesem Grund arbeiten die meisten Elektrolichtbogenöfen bei leicht erhöhten Leistungsfaktoren, die sich zwischen cos α = 0,72 und 0,78 bewegen.

Nach dem Stand der Technik wurden Versuche unternommen, um den Leistungsfaktor in ein Kontrollsystem zur Kontrolle der Elektroden in Elektrolichtbogenöfen einzubeziehen. Diese Versuche konzentrierten sich jedoch auf die Verwendung des Leistungsfaktors zur Kontrolle der Stromquelle für den Elektroiichtbogenofen oder ais ein Zweit- oder "Korrektur"-Signal in den sonst bekannten Regulierungssystemen, die auf Strom oder Impedanz basieren. Bestenfalls ist es diesen Versuchen lediglich gelungen, den Leistungsfaktor als eine indirekte oder zweite Prozeßeingabe zu verwenden, und sie sind daher keine wirklichen Regulierungssysteme, die auf dem Leistungsfaktor basieren.

Zum Beispiel offenbart das US-Patent 3,435,121 an Jackson ein Kontrollsystem, das auf die Lichtbogenleistung anspricht, für Öfen mit selbstverzehrenden Elektroden, das den Leistungsfaktor vielmehr als ein Kontrollkriterium oder als einen Wert zur Kontrolle einer Transformatorenleistungsquelle des Ofens verwendet, denn als ein Kontrollkriterium zur Kontrolle der Anordnung der Ofenelektroden. Besonders umfaßt der Steuerkreis der Transformatorenleistungsquelle, die vom Jackson-Patent offenbart wird, einen Leistungsfaktorumformer, der ein Lichtbogenstromsignal und ein Lichtbogenspannungssignal von der Transformatorenleistungsquelle erhält. Vom Leistungsfaktorumformer wird ein Signal, das den Phasenwinkel zwischen dem Lichtbogenstromsignal und dem Lichtbogenspannungssignal angibt, in einen Leistungsfaktordetektor gespeist, der den tatsächlichen Leistungsfaktor mit einer gewünschten Leistungsfaktorspanne vergleicht. Wenn sich der tatsächliche Leistungsfaktor außerhalb der gewünschten Leistungsfaktorspanne befindet, stellt der Leistungsfaktordetektor ein Ausgabesignal bereit. Das Ausgabesignal, das der Transformatorenleistungsquelle bereitgestellt wird, identifiziert, welcher Transformatorentap auf der Transformatorenleistungsquelle verwendet werden soll. Das Ausgabesignal wird nicht als eine Prozeßeingabe an den Elektrodenkontrollkreis verwendet, der vom Jackson-Patent offenbart wird. Dieser Elektrodenkontrollkreis wird von einem Leistungsumformer, der die Lichtbogenstrom- und die Lichtbogenspannungssignale von der Transformatorenleistungsquelle empfängt, einem Leistungsmittelwertbildungskreis, einem Leistungsvergleichskreis, einer Leistungsreferenzquelle, einer Amplidyne und einem Elektrodenantriebsmotor definiert. Das Ausgabesignal, das vom Leistungsfaktordetektor erzeugt wird, wird nicht als eine Prozeßeingabe an diese Kontrolleinheit bereitgestellt. Daher ist das Kontrollsystem, das vom Jackson-Patent offenbart wird, nicht dazu konfiguriert, die Anordnung der Elektroden in den Öfen, die direkt auf dem Leistungsfaktor als einer Prozeßeingabe an den Elektrodenkontrollkreis basiert, zu ändern.

Ein anderes System des Stands der Technik, das versucht, den Leistungsfaktor in ein Kontrollsystem zur Kontrolle der Elektroden in Elektrolichtbogenöfen einzubeziehen, wird im US-Patent 3,662,075 an Sakai et al. (nachfolgend "das Sakai-Patent") offenbart. Das Elektrodenkontrollsystem, das vom Sakai-Patent offenbart wird, umfaßt einen Elektrodenantriebsmechanismus, einen automatischen Stromregler, der auf den Strom anspricht, der durch die Elektrode fließt, und eine Programmkontrolleinheit, die zwischen dem automatischen Stromregler und dem Elektrodenantriebsmechanismus zur Übertragung der Elektrodenkontrollsignale an den Elektrodenantriebsmechanismus verbunden ist. Ein Leistungsfaktorregler, der auf den tatsächlichen Leistungsfaktor des Ofens anspricht, ist mit der Programmkontrolleinheit verbunden, um der Programmkontrolleinheit ein Fehlerkorrektursignal bereitzustellen. Die Programmkontrolleinheit überträgt Elektrodenkontrollsignale an den Elektrodenantriebsmechanismus, die auf dem Strom basieren, der durch die Elektrode fließt, um die Elektrode zu heben oder zu senken. Der tatsächliche Leistungsfaktor der Elektrode wird vom Leistungsfaktorregler an die Programmkontrolleinheit übertragen um sicherzustellen, daß das Elektrodenkontrollsignal, das vom automatischen Stromregler an den Elektrodenantriebsmechanismus geschickt wird, die Elektrode in die richtige Richtung im Elektrolichtbogenofen bewegt, d.h. auf- oder abwärts. Das Korrektursignal, das vom Leistungsfaktorregler erzeugt wird, wird wegen der Fehler bereitgestellt, die mit der Regulierung der Elektrode verbunden sind, die auf dem Betriebsstrom basiert. Zum Beispiel kann bei gewissen Betriebsbedingungen der automatische Stromregler der Programmkontrolleinheit ein falsches "niedriges" Signal bereitstellen, das vom Korrektursignal, das vom Leistungsfaktorregler erzeugt und an die Programmkontrolleinheit geschickt wird, "korrigiert" wird. Daher erfordert die Programmkontrolleinheit, die vom Sakai-Patent offenbart wird, zwei Aufnahmesignale, ein erstes "Kontroll"-Signal vom automatischen Stromregler und ein Zweit- oder Korrektursignal vom Leistungsfaktorregler, und sie reguliert folglich nicht nur auf Grundlage des Leistungsfaktors. Das Kontrollsystem, das vom Sakai-Patent offenbart wird, ist zunächst ein Reguliersystem, das auf Strom basiert, das den Leistungsfaktor nur in zweiter Linie benutzt, um Fehler zu korrigieren.

Während nach dem Stand der Technik Systeme bekannt sind, die versuchen, den Leistungsfaktor in ein Kontrollsystem zur Kontrolle der Elektroden in Elektrolichtbogenöfen einzubeziehen, verwenden diese Systeme nach dem Stand der Technik den Leistungsfaktor nur als ein Zweit- oder Korrektursignal oder dazu, die Stromquelle der Elektrolichtbogenöfen zu kontrollieren. Außerdem erzeugen diese Systeme des Stands der Technik nur ein Signal, das den Leistungsfaktor angibt, wenn der tatsächliche Leistungsfaktor der Elektrode sich außerhalb einer Leistungsfaktorspanne befindet. Folglich werden bestmögliche Arbeits-/Betriebsbedingungen der Elektrolichtbogenöfen nie erreicht, da diese Systeme des Stands der Technik einen vorgewählten Leistungsfaktorsollwert nicht herstellen und aufrechterhalten können.

Durch die US 4,096,344 gehört ein Kontrollsystem für Elektrolichtbogenöfen zum Stand der Technik, das eine Elektroden-Abstandsregelung auf Basis eines Vergleichs zwischen einem bestimmten Verhältnis von sekundärseitiger Scheinleistung zu Wirkleistung mit einem vorgegebenen Referenzverhältnis durchführt; aber auch bei diesem Kontrollsystem wird zusätzlich eine Stromregelung zur Elektroden-Abstandsregelung hinzugezogen.

Angesichts des oben Gesagten ist es eine Aufgabe der vorliegenden Erfindung, ein Elektrodenkontrollsystem und ein Verfahren zur Kontrolle der Anordnung der Elektroden in den Elektrolichtbogenöfen bereitzustellen, das alleinig auf einer direkten Leistungsfaktorregulierung basiert. Es ist ebenfalls eine Aufgabe der vorliegenden Erfindung, ein Elektrodenkontrollsystem bereitzustellen, das entweder zur Regulierung, die auf Impedanz basiert, oder zur direkten Leistungsfaktorregulierung in der Lage ist.

### ZUSAMMENFASSUNG DER ERFINDUNG

Die obengenannten Aufgaben werden mit einem Elektrodenkontrollsystem für einen Elektrolichtbogenofen und einem Verfahren zur Kontrolle der Anordnung der Elektroden in einem Elektrolichtbogenofen in Übereinstimmung mit der vorliegenden Erfindung gelöst. Besonders betrifft die vorliegende Erfindung eine automatische Elektrodenregulierung oder ein automatisches Kontrollsystem zur Regulierung des Lichtbogens oder der "Lichtbogenlänge" von Elektroden in Elektrolichtbogenöfen für Schrottmetall und Elektrolichtbogenpfannenöfen des Wechselstromtyps (AC). Das Elektrodenkontrollsystem der vorliegenden Erfindung umfaßt einen Stromtransformator zur Bestimmung des Betriebsstroms jeder Elektrode und einen Spannungstransformator zur Bestimmung der Betriebsspannung jeder Elektrode. Ein aktiver Leistungsumformer (engl: active power transducer, nachfolgend als Wirkleistungsumformer bezeichnet) wird mit dem Stromtransformator und dem Spannungstransformator zur Berechnung der aktiven Leistung (engl: active power, nachfolgend als Wirkleistung bezeichnet) der Elektrode in Form eines ersten Ausgabesignals aus dem gemessenen Betriebsstrom und der gemessenen Betriebsspannung verbunden. Ein wattloser Leistungsumformer (engl: reactive power transducer, nachfolgend als Blindleistungsumformer bezeichnet) wird mit dem Stromtransformator und dem Spannungstransformator zur Berechnung der wattlosen Leistung (engl.: reactive power, nachfolgend als Blindleistung bezeichnet) der Elektrode in Form eines zweiten Ausgangssignals aus dem gemessenen Betriebsstrom und von der Betriebsspannung verbunden. Eine programmierbare Kontrolleinheit wird mit dem Wirkleistungsumformer und dem Blindleistungsumformer zum Empfang des ersten und des zweiten Ausgabesignals verbunden. Die Kontrolleinheit wird so konfiguriert, daß sie den Leistungsfaktor der Elektrode aus dem ersten und zweiten Ausgabesignal berechnet und den Leistungsfaktor mit einem vorprogrammierten Leistungsfaktorsollwert vergleicht. Die Kontrolleinheit wird weiter so konfiguriert, daß sie ein Kontrollsignal erzeugt, das den Unterschied zwischen dem Leistungsfaktor und dem Leistungsfaktorsollwert angibt. Ein Elektrodenanordnungsmechanismus wird bereitgestellt, um die Bewegung der Elektrode zu kontrollieren. Der Elektrodenanordnungsmechanismus wird mit der Kontrolleinheit zum Empfang des Kontrollsignals verbunden. Der Elektrodenanordnungsmechanismus wird so konfiguriert, daß er einen vertikalen Abstand des Elektrodenendes, aus dem der Lichtbogen austritt, von der Oberfläche des geschmolzenen Metalls in dem Ofen so einstellt, dass sich der Leistungsfaktor dem Leistungsfaktorsollwert annähert.

Die Kontrolleinheit kann weiter eine Leistungsfaktorberechnungseinheit umfassen, die mit dem Wirkleistung- und dem Blindleistungsumformer zum Empfang des ersten und des zweiten Ausgabesignals verbunden ist. Die Leistungsfaktorberechnungseinheit kann so konfiguriert werden, daß sie den Leistungsfaktor der Elektrode berechnet und ein drittes Ausgabesignal erzeugt, das den Leistungsfaktor der Elektrode angibt. Die Kontrolleinheit kann weiter ein Steuergerät umfassen, das mit der Leistungsfaktorberechnungseinheit zum Empfang des dritten Ausgabesignals verbunden ist. Das Steuergerät kann so konfiguriert werden, daß es das dritte Ausgabesignal mit dem Leistungsfaktorsollwert vergleicht und ein Kontrollsignal für den Elektrodenanordnungsmechanismus erzeugt.

Der Elektrodenanordnungsmechanismus kontrolliert vorzugsweise den vertikalen Abstand des Elektrodenendes, aus dem der Lichtbogen austritt, von der Oberfläche des geschmolzenen Metalls, das im Elektrolichtbogenofen enthalten ist. Der Elektrodenanordnungsmechanismus kann eine elektromechanische Vorrichtung sein, die operativ mit der Elektrode zur Anpassung des vertikalen Abstandes des Elektrodenendes, aus dem der Lichtbogen austritt, von der Oberfläche des geschmolzenen Metalls verbunden ist. Der Stromtransformator und der Spannungstransformator können auf der Sekundärseite mit dem Ofentransformator verbunden sein, um den Betriebsstrom und die Betriebsspannung der Elektrode zu bestimmen. Die programmierbare Kontrolleinheit kann ein programmierbarer Computer sein.

Die vorliegende Erfindung stellt auch ein Verfahren zur Kontrolle der Anordnung einer Elektrode in einem Elektrolichtbogenofen dar, der einen Ofentransformator und einen Elektrodenanordnungsmechanismus umfaßt. Das Verfahren kann die folgenden Schritte umfassen: Bestimmung der Wirkleistung der Elektrode aus dem Betriebsstrom und der Betriebsspannung der Elektrode; Bestimmung der Blindleistung der Elektrode aus dem Betriebsstrom und der Betriebsspannung der Elektrode; Berechnung des Leistungsfaktors der Elektrode aus der Wirkleistung und der Blindleistung der Elektrode; Vergleich des Leistungsfaktors mit einem vorgewählten Leistungsfaktorsollwert für die Elektrode; Bereitstellung eines Kontrollsignals, das einen Unterschied zwischen dem Leistungsfaktor und dem vorgewählten Leistungsfaktorsollwert an den Elektrodenanordnungsmechanismus übermittelt; und Kontrolle des vertikalen Abstandes des Elektrodenendes, aus dem der Lichtbogen austritt, von der Oberfläche des geschmolzenen Metalls im Elektrolichtbogenofen, wobei der Elektrodenanordnungsmechanismus von dem Kontrollsignal so angesteuert wird, dass sich der Leistungsfaktor der Elektrode dem Leistungsfaktorsollwert annähert.

Außerdem stellt die vorliegende Erfindung ein Elektrodenkontrollsystem dar, das in der Lage ist, in einem Elektrolichtbogenofen eine Regulierung entweder auf Basis der Impedanz oder auf Basis des Leistungsfaktors durchzuführen. Dementsprechend kann das Elektrodenkontrollsystem, das oben besprochen wurde, weiter eine Elektrodenimpedanzberechnungseinheit umfassen, die mit dem Stromtransformator über einen Stromumformer und mit dem Spannungstransformator über den Spannungsumformer zur Berechnung der Elektrodenimpedanz vom gemessenen Betriebsstrom und der Betriebsspannung verbunden ist. Die programmierbare Kontrolleinheit kann mit dem Wirkleistungsumformer, dem Blindleistungsumformer und weiter mit der Elektrodenimpedanzberechnungseinheit verbunden werden. Die Kontrolleinheit kann so konfiguriert werden, daß sie entweder den Leistungsfaktor der Elektrode aus der Wirkleistung und der Blindleistung der Elektrode berechnet und den Leistungsfaktor mit einem vorprogrammierten Leistungsfaktorsollwert vergleicht. Die Kontrolleinheit kann aber auch so konfiguriert werden, daß sie die Elektrodenimpedanz mit einem vorprogrammierten Impedanzsollwert vergleicht. Die Kontrolleinheit kann auch so konfiguriert werden, daß sie ein Kontrollsignal erzeugt, das den Unterschied zwischen dem Leistungsfaktor und dem Leistungsfaktorsollwert oder den Unterschied zwischen der Elektrodenimpedanz und dem Impedanzsollwert angibt. Der Elektrodenanordnungsmechanismus kann mit der Kontrolleinheit zum Erhalt des Kontrollsignals verbunden werden und kann so konfiguriert werden, daß er ständig den vertikalen Abstand des Elektrodenendes, aus dem der Lichtbogen austritt, von der Oberfläche des geschmolzenen Metalls einstellt, so daß der Leistungsfaktor sich dem Leistungsfaktorsollwert annähert, oder daß die Elektrodenimpedanz sich dem Impedanzsollwert annähert.

Außerdem stellt die vorliegende Erfindung ein Verfahren zur Kontrolle der Anordnung einer Elektrode in einem Elektrolichtbogenofen auf der Grundlage der Impedanz- oder der Leistungsfaktorregulierung dar. Dementsprechend kann das oben besprochene Verfahren weiter die Schritte der Bestimmung der Elektrodenimpedanz aus dem Betriebsstrom und der Betriebsspannung der Elektrode umfassen; die Bereitstellung eines Kontrollsignals an den Elektrodenanordnungsmechanismus, das entweder den Unterschied zwischen dem Leistungsfaktor und einem vorgewählten Leistungsfaktorsollwert oder den Unterschied zwischen der Elektrodenimpedanz und einem vorgewählten lmpedanzsollwert angibt; und die Kontrolle des vertikalen Abstands des Elektrodenendes, aus dem der Lichtbogen austritt, von der Oberfläche des geschmolzenen Metalls im Elektrolichtbogenofen, wobei der Elektrodenanordnungsmechanismus von dem Kontrollsignal so gesteuert wird, daß der Leistungsfaktor der Elektrode sich dem Leistungsfaktorsollwert annähert, oder daß sich die Elektrodenimpedanz dem Impedanzsollwert annähert.

Weitere Einzelheiten und Vorteile werden aus der folgenden ausführlichen Beschreibung zusammen mit den Zeichnungen offenkundig.

KURZE BESCHREIBUNG DER ZEICHNUNGEN
- Fig. 1: ist ein Kreisdiagramm der Betriebsspannung gegen den Betriebsstrom für eine Elektrode in einem Elektrolichtbogenofen, welches die Leistungsfaktorwerte für fünf Leistungsfaktorsollwerte zeigt.
- Fig. 2: ist eine Aufrißseitenansicht eines Elektrolichtbogenofensystems nach dem Stand der Technik;
- Fig. 3: ist ein schematischer Schaltplan eines Elektrodenkontrollsystems in Übereinstimmung mit der vorliegenden Erfindung; und
- Fig. 4: ist ein schematischer Schaltplan eines zweiten Ausführungsbeispiels des Elektrodenkontrollsystems der vorliegenden Erfindung.

### BESCHREIBUNG DES BEVORZUGTEN AUSFÜHRUNGSBEISPIELS

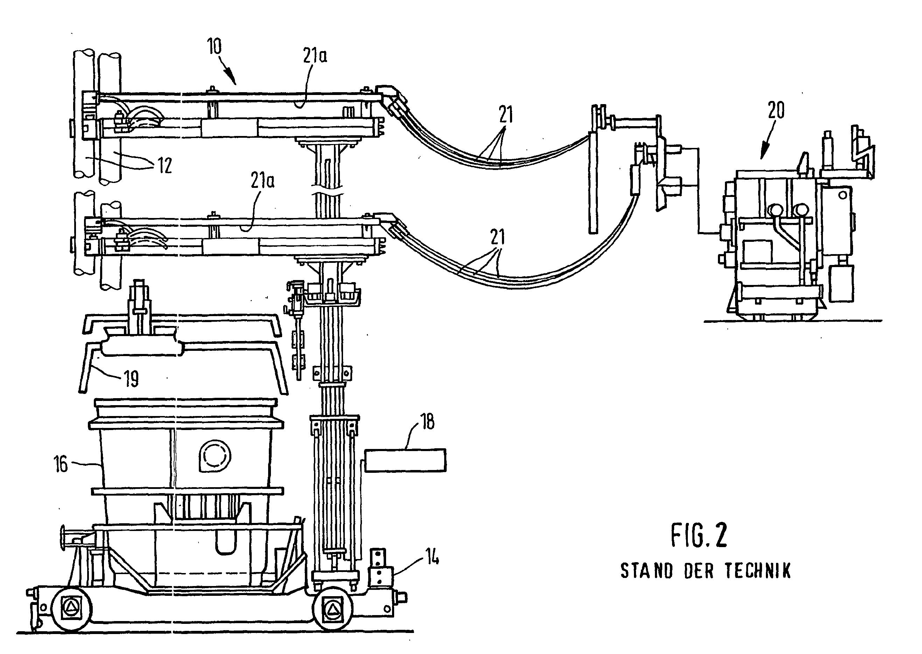

Fig. 2 zeigt einen Elektrolichtbogenofen nach dem Stand der Technik, der Elektroden 12 umfaßt. Der Ofen 10, der in Fig. 2 gezeigt wird, ist ein Elektrolichtbogenpfannenofen. Die Erfindung, die im Folgenden beschrieben wird, kann jedoch in jeder Art von Elektrolichtbogenofen verwendet werden, wie z.B. einem Elektrolichtbogenofen für Schrottmetall, wie von den Fachleuten erkannt werden wird. Der Ofen 10 umfaßt im allgemeinen einen Pfannenübertragungswagen 14, auf dem eine Pfanne 16, ein Elektrodenanordnungsmechanismus 18 zur Hebung und zur Absenkung der entsprechenden Elektroden 12, ein Ptannendach 19 und außerdem die Elektroden 12 angebracht sind. Die Elektroden 12 werden von einer Stromquelle (nicht gezeigt) durch einen Ofentransformator 20 über wassergekühlte Kupferkabel 21 und über einen Kupferbus mit elektrischem Arm 21 a angetrieben.

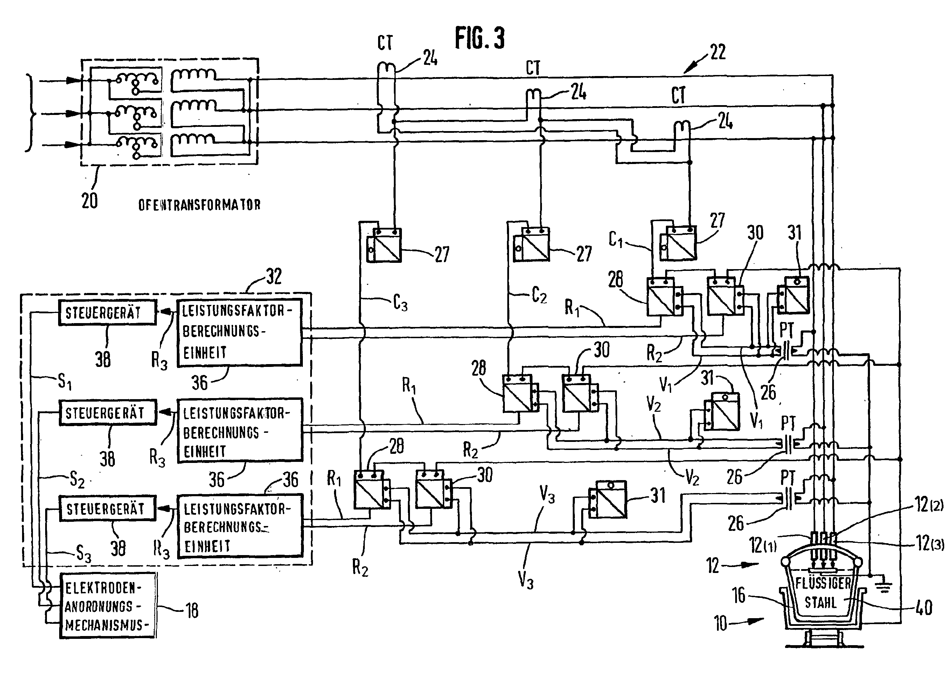

Fig. 3 zeigt ein automatisches Elektrodenkontrollsystem 22 in Übereinstimmung mit der vorliegenden Erfindung für den Ofen 10, das so konfiguriert ist, daß es die Elektroden 12 auf der Grundlage einer direkten Leistungsfaktorregulierung kontrolliert. Das System 22 umfasst den Ofentransformator 20, der mit jeder der Elektroden 12 verbunden ist, die in Fig. 3 mit den Referenznummern 12(1), 12(2) und 12(3) getrennt gekennzeichnet sind. Für jede der Elektroden ist jeweils ein Stromtransformator 24 mit der Sekundärseite des Transformators 20 verbunden, um den Betriebsstrom der einzelnen Elektroden 12 zu messen. Die Stromtransformatoren 24 sind Standardausrüstung und in der Technik gut bekannt. Die Stromtransformatoren 24 stellen Stromausgabesignale C₁, C₂, C₃ bereit, die den Betriebsstrom der entsprechenden Elektroden 12 angeben. Eine zweite Phase jeweils eines Spannungstransformators 26 ist ebenfalls mit der Sekundärseite des Transformators 20 für jede der Elektroden 12 verbunden. Die Spannungstransformatoren 26 sind Standardausrüstung und in der Technik gut bekannt. Die Spannungstransformatoren 26 stellen Spannungsausgabesignale V₁, V₂, V₃ bereit, welche die Betriebsspannung der entsprechenden Elektroden 12 angeben.

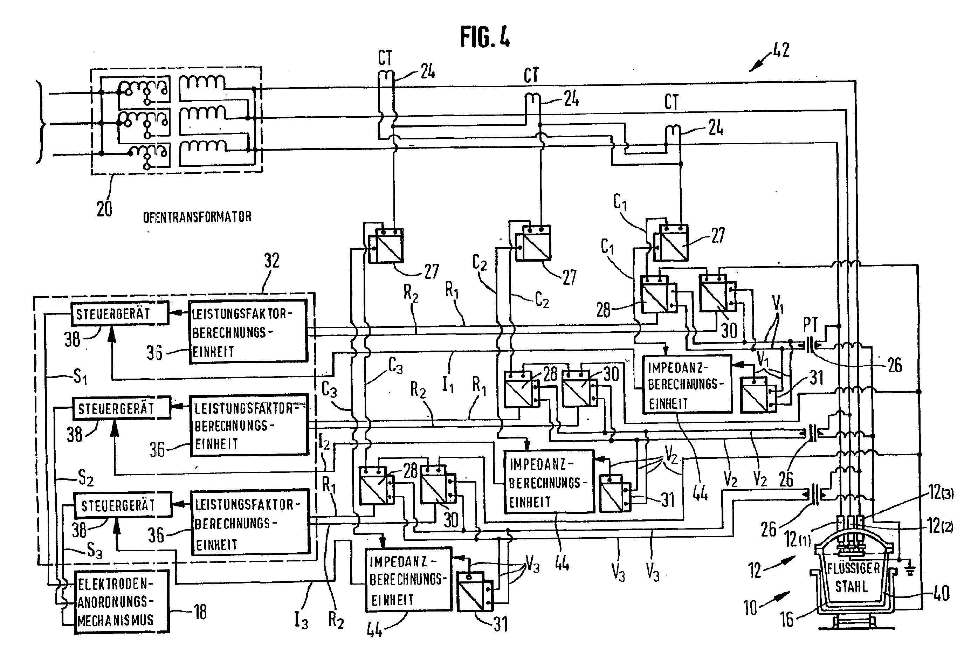

Das Elektrodenkontrollsystem 22 kann weiter Stromumformer 27 umfassen, die mit den Stromtransformatoren 24 für die Elektroden 12 verbunden sind. In der Betriebsart Leistungsfaktorregulierung der vorliegenden Erfindung, die in Fig. 3 gezeigt wird, fließen die Stromausgabesignale C₁, C₂, C₃ für die Elektroden 12 durch die entsprechenden Stromumformer 27. Somit sind die Stromumformer 27 in der Betriebsart Leistungsfaktorregulierung, die in Fig. 3 gezeigt wird, nicht erforderlich, aber sie können enthalten sein, wenn das Elektrodenkontrollsystem 22 Teil eines Regulierungssystems mit zwei Betriebsarten ist, das auf dem Leistungsfaktor und der Impedanz basiert, wie es in Fig. 4 gezeigt und im Folgenden besprochen wird. Die Stromumformer 27 können weiter mit einem Anzeigebildschirm/Steuerpult (nicht gezeigt) für das Elektrodenkontrollsystem 22 verbunden sein, so daß ein Bediener den Betriebsstrom der Elektroden 12 überwachen und entsprechende Einstellungen vornehmen kann. Die Stromumformer 27 sind Standardausrüstung und sind in der Technik gut bekannt.

Die Stromtransformatoren 24 und die Spannungstransformatoren 26, die an der Sekundärseite des Transformators 20 angebracht sind, sind mit einem Wirkleistungsumformer 28 beziehungsweise zu einem Blindleistungsumwandler 30 für jede der Elektroden 12 verbunden. Die Stromumformer 27 sind, wenn vorhanden, zwischen den Stromtransformatoren 24 und den Wirk- und Blindleistungsumformem 28, 30 angebracht und verbunden. Die Wirk- und Blindleistungsumformer 28, 30 erzeugen erste beziehungsweise zweite Ausgabesignale R₁, R₂, welche die Wirkleistungskomponente und Blindleistungskomponente der entsprechenden Elektroden 12 angeben, die dazu verwendet werden, um den Leistungsfaktor oder den "gemessenen" Leistungsfaktor der Elektroden 12 zu berechnen. Die Wirk- und Blindleistungsumformer 28, 30 berechnen die Wirk- leistungskomponente bzw. die Blindleistungskomponente der Elektroden 12 auf der Grundlage des mit Hilfe der Stromtransformatoren 24 bestimmten Betriebsstroms und der mit Hilfe der Spannungstransformatoren 26 bestimmten Betriebsspannung. Die Wirk- und Blindleistungskomponente der entsprechenden Elektroden 12 werden dann als das erste und zweite Ausgabesignal R₁, R₂ bereitgestellt. Zum Beispiel berechnet der Wirkleistungsumformer 28, der mit der ersten Elektrode 12(1) verbunden ist, die Wirkleistung der ersten Elektrode 12(1) und erzeugt das erste Ausgabesignal R₁, das diesen Wert angibt. Ähnlich berechnet der Blindleistungsumformer 30, der mit der ersten Elektrode 12(1) verbunden ist, die Blindleistungskomponente der ersten Elektrode 12(1) und erzeugt das zweite Ausgabesignal R₂, das diesen Wert angibt.

Das Elektrodenkontrollsystem 22 kann weiter je einen Spannungsumformer 31 umfassen, der mit der Sekundärseite des Transformators 20 für jede der Elektroden 12 verbunden ist, um die Betriebsspannung der entsprechenden Elektroden 12 zu bestimmen. Obwohl sie nicht als eine Prozeßwerteingabe in der Leistungsfaktorregulierungsbetriebsart verwendet werden, die in Fig. 3 gezeigt wird, werden die Spannungsausgabesignale V₁, V₂, V₃ von den entsprechenden Spannungsumformern 31 in der Impedanzregulierungsbetriebsart der vorliegenden Erfindung verwendet, die in Fig. 4 gezeigt wird, wie im Folgenden besprochen wird. Die Spannungsausgabesignale V₁, V₂, V₃ können an dem Anzeigebildschirm/Steuerpult (nicht gezeigt) für das Elektrodenkontrollsystem 22 zusammen mit den Stromausgabesignalen C1, C2, C3 von den Stromumformern 27 angezeigt werden, die oben besprochen wurden. Die Spannungsumformer 31 sind Standardausrüstung und in der Technik gut bekannt.

Das erste und zweite Ausgabesignal R₁, R₂, welche die entsprechenden Wirk- bzw. Blindleistungskomponente der Elektroden 12 angeben, werden an eine programmierbare logische Steuerung (PLC) oder einen programmierbaren Computer (im Folgenden bezeichnet als "Kontrolleinheit 32"), übertragen, die entsprechende Kontrollsignale S₁, S₂, S₃ erzeugt, die zum Elektrodenanordnungsmechanismus 18 geschickt werden. Der Elektrodenanordnungsmechanismus 18 kann ein elektromechanisches Steuergerät sein, das ein hydraulisches Ventil (nicht gezeigt) umfaßt. Der Elektrodenanordnungsmechanismus 18 stellt den vertikalen Abstand des Elektrodenendes, aus dem der Lichtbogen austritt, von der Oberfläche des geschmolzenen Metalls ein. Der Elektrodenanordnungsmechanismus 18, der in Fig. 3 in Blockform gezeigt wird, ist gleich dem elektronischen Anordnungsmechanismus, der in Fig. 2 gezeigt wird, und ist in der Industrie gut bekannt und ein Standard. Die Kontrolleinheit 32 kann ein Alan Bradley PLC Modell 5/40E und damit gleichwertig sein.

Die Kontrolleinheit 32 umfaßt vorzugsweise je eine Leistungsfaktorberechnungseinheit 36 für jede der Elektroden 12, wobei die Einheiten 36 jeweils das erste und zweite Ausgabesignal R₁, R₂ von den entsprechenden Wirk- und Blindleistungsumformern 28, 30 empfangen. Die Leistungsfaktorberechnungseinheiten 36 werden so konfiguriert, daß sie den Leistungsfaktor der entsprechenden Elektroden 12 auf der Grundlage des ersten und zweiten Ausgabesignals R₁, R₂, berechnen und ein drittes Ausgabesignal R₃ erzeugen, das den Leistungsfaktor der entsprechenden Elektroden 12 angibt. Die dritten Ausgabesignale R₃, die von den Leistungsfaktorberechnungseinheiten 36 erzeugt werden, werden zu den entsprechenden Steuergeräten 38 übertragen, die den Leistungsfaktorberechnungseinheiten 36 jeweils nachgeschaltet sind. Die Steuergeräte 38 sind vorzugsweise programmierbar, um einen vorgewählten Leistungsfaktorsollwert aufzuweisen und sie werden so konfiguriert, daß sie den Leistungsfaktor der Elektroden 12 mit dem vorgewählten Leistungsfaktorsollwert vergleichen. Die Steuergeräte 38 erzeugen dann die einzelnen Kontrollsignale S₁, S₂, S₃, die an den Elektrodenanordnungsmechanismus 18 geschickt werden, um die entsprechenden Elektroden 12 richtig anzuordnen.

Der Elektrodenanordnungsmechanismus 18 stellt auf der Grundlage der Kontrollsignale S₁, S₂, S₃ ständig den vertikalen Abstand des Elektrodenendes, aus dem der Lichtbogen austritt, von der Oberfläche des geschmolzenen Metalls ein, um den Leistungsfaktor der Elektroden 12 an den vorgewählten Leistungsfaktorsollwert für jeden der Elektroden 12 heranzuführen. Besonders kontrolliert der Elektrodenanordnungsmechanismus 18 auf der Grundlage der Kontrollsignale S₁, S₂, S₃ ständig den vertikalen Abstand des Elektrodenendes, aus dem der Lichtbogen austritt, von der Oberfläche des geschmolzenen Metalls 40 in der Pfanne 16, so daß der Leistungsfaktor jeder Elektrode 12 im Wesentlichen dem vorgewählten Leistungsfaktorsollwert für die Elektrode 12 entspricht, d.h. sich ihm annähert. Auf diese Weise wird ein ständiger Leistungsfaktorsollwert in jeder einzelnen Elektrode 12 im Wesentlichen beibehalten und optimiert. Die Kontrollsignale S₁, S₂, S₃, die von der Kontrolleinheit 32 erzeugt werden, sind kontinuierlich, und somit stellt die Kontrolleinheit 32 den Elektrodenanordnungsmechanismus 18 ständig ein, um den Leistungsfaktor im Wesentlichen auf den voreingestellten Leistungsfaktorsollwert für jede der Elektroden 12 einzustellen.

Die Kontrollsignale S₁, S₂, S₃, die von der Kontrolleinheit 32 erzeugt werden, basieren auf dem Leistungsfaktor der entsprechenden Elektroden 12 als Prozeßwerteingaben, und Zusatz- oder Korrekturkontrolleinheiten wie diejenigen, die nach dem Stand der Technik anzutreffen sind, die oben besprochen wurden, sind nicht erforderlich. Außerdem ist das obenbeschriebene System ein wahres Reguliersystem im Gegensatz zu den Kontrollsystemen des Stands der Technik, die oben besprochen wurden, da die Kontrollsignale S₁, S₂, S₃, direkt den Leistungsfaktor angeben.

Die vorliegende Erfindung betrifft auch ein Verfahren, um die Anordnung der Elektroden 12 im Elektrolichtbogenofen 10 ständig zu kontrollieren und umfaßt im allgemeinen die folgenden Schritte: Bestimmung des Betriebsstroms der Elektrode auf der Sekundärseite des Ofentransformators; Bestimmung der Betriebsspannung der Elektrode auf der Sekundärseite des Transformators; Bestimmung der Wirkleistung der Elektrode aus dem Betriebsstrom und der Betriebsspannung der Elektrode; Erzeugung eines ersten Ausgabesignals, das die Wirkleistung der Elektrode angibt; Bestimmung der Blindleistung der Elektrode aus dem Betriebsstrom und der Betriebsspannung der Elektrode; Erzeugung eines zweiten Ausgabesignals, das die Blindleistung der Elektrode angibt. Berechnung des Leistungsfaktors der Elektrode aus der Wirkleistung und der Blindleistung in einer programmierbaren Kontrolleinheit; Vergleich des Leistungsfaktors mit einem vorgewählten Leistungsfaktorsollwert für die Elektrode in der programmierbaren Kontrolleinheit, wobei die Kontrolleinheit vorzugsweise eine Leistungsfaktorberechnungseinheit und ein Steuergerät umfaßt. Bereitstellung eines Kontrollsignals, das die Differenz zwischen dem Leistungsfaktor und dem vorgewählten Leistungsfaktorsollwert darstellt und an den Elektrodenanordnungsmechanismus gegeben wird; und Einstellen des vertikalen Abstandes des Elektrodenendes, aus dem der Lichtbogen austritt, von der Oberfläche des geschmolzenen Metalls so, dass der Leistungsfaktor der Elektrode sich dem Leistungsfaktorsollwert annähert.

Das Verfahren kann auch die folgenden Schritte umfassen: Empfang des ersten und zweiten Ausgabesignals durch die Leistungsfaktorberechnungseinheit zur Berechnung des tatsächlichen Leistungsfaktors der Elektrode; Erzeugung eines dritten Ausgabesignals, das den Leistungsfaktor der Elektrode angibt; und Empfang des dritten Ausgabesignals am Steuergerät, so dass der Schritt des Vergleichs des Leistungsfaktors mit dem vorgewählten Leistungsfaktorsollwert für die Elektrode im Steuergerät erfolgt, das dann das Kontrollsignal erzeugt. Das Kontrollsignal ist vorzugsweise kontinuierlich, so daß der Elektrodenanordnungsmechanismus den vertikalen Abstand des Elektrodenendes, aus dem der Lichtbogen austritt, von der Oberfläche des geschmolzenen Metalls im Elektrolichtbogenofen ständig einstellt.

Nun unter Bezugnahme auf Fig. 4 wird ein zweites Ausführungsbeispiel der vorliegenden Erfindung gezeigt und im Allgemeinen mit der Bezugsnummer 42 bezeichnet. Das Elektrodenkontrollsystem 42 von Fig. 4 ist ein System mit zwei Betriebsarten, das dazu in der Lage ist, die Elektroden 12 auf der Grundlage einer direkten Leistungsfaktorregelung oder einer Elektrodenimpedanzregelung zu kontrollieren. Das Elektrodenkontrollsystem 42 von Fig. 4 ist im Wesentlichen ähnlich dem Elektrodenkontrollsystem 22 von Fig. 3, aber umfaßt außerdem je eine Elektrodenimpedanzberechnungseinheit 44, die mit dem Ausgang des Stromumformers 27 und dem Ausgang des Spannungsumformers 31 für jede der Elektroden 12 verbunden ist. Im System mit zwei Betriebsarten von Fig. 4 wird, wenn die Regelung gewählt wird, die auf der Impedanz basiert, der jeweils gemessene Wert des Betriebsstroms von dem Stromtransformator 24 auf den Stromumformer 27 gegeben, und der jeweils gemessene Wert der Betriebsspannung wird von dem jeweiligen Spannungsumformer 31 empfangen. Die Stromumformer 27 werden bereitgestellt, um den gemessenen Wert des Betriebsstroms der entsprechenden Elektroden 12 so einzustellen, dass er als Prozeßwerteingabe für die Impedanzberechnungseinheiten 44 geeignet ist. Dementsprechend stellen die Stromumformer 27 die entsprechenden Stromausgabesignale C₁, C₂, C₃ als umgeformte Prozeßwerteingaben an die Berechnungseinheiten 24 bereit.

Zum Beispiel erhält der Stromumformer 27 für die erste Elektrode 12(1) den gemessenen Wert des Betriebsstroms der ersten Elektrode 12(1) vom Stromtransformator 24 und formt diesen erhaltenen Wert wie erforderlich so um, dass der Wert als Prozesswerteingabe an die Impedanzberechnungseinheit 44 für die erste Elektrode 12(1) geeignet ist. Der vom Stromtransformator 24 gemessene Wert kann zum Beispiel 0,5A betragen und der Stromumformer 27 kann diesen erhaltenen Wert z.B. in 4,20 mA umformen, um den gemessenen Wert zu einer geeigneten Prozeßwerteingabe an die Impedanzberechnungseinheit 44 für die erste Elektrode 12(1) zu machen. Die Spannungsumformer 31 arbeiten auf eine ähnliche Weise wie der Stromumformer 27, wie von den Fachleuten erkannt werden wird. Die Spannungsumformer 31 stellen die Spannungsausgabesignale V₁, V₂, V₃ als umgeformte Prozesswerteingaben für die Impedanzberechnungseinheiten 44 bereit. Wie oben angegeben, sind die Stromumformer 27 und die Spannungsumformer 31 in der Betrieb art "Leistungsfaktorregelung", die oben im Verbindung mit der Fig. 3 besprochen wurde, nicht erforderlich.

Die Elektrodenimpedanzberechnungseinheiten 44 ermöglichen es dem Elektrodenkontrollsystem 42, das in Fig. 4 gezeigt wird, die Elektroden 12, auf der Grundlage entweder der Elektrodenimpedanz oder des Leistungsfaktors zu regulieren, in Abhängigkeit davon, welche Betriebsart gewählt wurde. Ein Wechsel zwischen den zwei Betriebsarten kann von einem Bediener durch die Verwendung eines Wahlschalters auf dem Anzeigebildschirm/Steuerpult (nicht gezeigt) der Kontrolleinheit 32 durchgeführt werden oder alternativ durch ein automatisches Prozeßkontrollsystem (nicht gezeigt), das ein Kontrollsignal an die Kontrolleinheit 32, insbesondere an die Steuergeräte 38 schickt. Dieses automatische Prozeßkontrollsystemsignal hängt von den Schmelz-/Veredelungsbedingungen ab, die im Ofen herrschen, wie von den Fachleuten erkannt werden wird.

Die Elektrodenimpedanzberechnungseinheiten 44 für die entsprechenden Elektroden 12 werden direkt mit den entsprechenden Steuergeräten 38 verbunden, die sich in der Kontrolleinheit 32 befinden. Wie oben besprochen, sind die Prozeßwerteingaben an die Elektrodenimpedanzberechnungseinheiten 44 die bestimmten Werte für die mit Hilfe der Stromtransformatoren 24 und der Stromumformer 27 bestimmten Betriebsströme C₁, C₂, C₃ und die mit Hilfe der Spannungstransformatoren 26 und Spannungsumformer 31 bestimmten Betriebsspannungen V₁, V₂, V₃ der entsprechenden Elektroden. Die Impedanzberechnungseinheiten 44 berechnen die Elektrodenimpedanz der entsprechenden Elektroden 12 von diesen Prozeßwerteingaben. Die Elektrodenimpedanzberechnungseinheiten 44 stellen die entsprechenden Impedanzausgabesignale, die in Fig. 4 mit den Bezugszeichen I₁, I₂, I₃ identifiziert werden, den entsprechenden Steuergeräten bereit, die sich in der Kontrolleinheit 32 befinden, wenn die Regulierungsbetriebsart gewählt wird, die auf der Impedanz basiert.

Die Kontrolleinheit 32 und besonders die Steuergeräte 38 werden vorzugsweise so konfiguriert, daß in der Betriebsart, die auf der Impedanz basiert, die Impedanzausgabesignale I₁, I₂, I₃ als die Grundlage für die Erzeugung der Kontrollsignale S₁, S₂, S₃ verwendet werden. In der Leistungsfaktorbetriebsart, die vorher besprochen wurde, gaben die dritten Ausgabesignale R₃ den Elektrodenleistungsfaktor an und wurden als die Grundlage für die Erzeugung der Kontrollsignale S₁, S₂, S₃ verwendet. Im Elektrodenkontrollsystem 42 der Fig. 4 wird erkannt werden, daß die Kontrollsignale S₁, S₂, S₃ Kontrollsignale, die auf der Elektrodenimpedanz basieren, oder Kontrollsignale, die auf dem Leistungsfaktor basieren, sein können, in Abhängigkeit davon, welche Betriebsart gewählt wird.

Auf eine ähnliche Weise wie für die Betriebsart Leistungsfaktorkontrolle, die oben besprochen wurde, sind die Steuergeräte vorzugsweise programmierbar, um über einen vorgewählten oder vorprogrammierten Impedanzsollwert zu verfügen. Die Steuergeräte 38 werden somit so konfiguriert, daß sie die Elektrodenimpedanz der entsprechenden Elektroden 12, die von den Elektrodenimpedanzberechnungseinheiten bereitgestellt werden, mit dem vorprogrammierten Impedanzsollwert vergleichen. Die Steuergeräte 38 erzeugen dann die Kontrollsignale S₁, S₂, S₃. In der Regelbetriebsart, die auf der Impedanz basiert, geben die Kontrollsignale S₁, S₂, S₃ den Unterschied zwischen der Elektrodenimpedanz und dem vorgewählten Impedanzsollwert an. In der Regelbetriebsart des Elektrodenkontrollsystems 42 der Fig. 4, die auf der Impedanz basiert, ist das Elektrodenkontrollsystem 42 weniger leistungsfähig bei der Aufrechterhaltung von oder der Annäherung an "bestmögliche" Arbeits-/Betriebsbedingungen im Elektrolichtbogenofen 10. Das Elektrodenkontrollsystem 42 der Fig. 4 stellt jedoch die Möglichkeit bereit, die Elektroden 12, entweder entsprechend dem Leistungsfaktor oder der Impedanz zu regulieren.

Die vorliegende Erfindung schafft ein Elektrodenkontrollsystem zur Kontrolle der Anordnung der Elektroden in einem Elektrolichtbogenofen, das auf der direkten Leistungsfaktorregulierung basiert. Das Elektrodenkontrollsystem der vorliegenden Erfindung ist dazu in der Lage, den Leistungsfaktor der Elektroden im Wesentlichen auf einen vorprogrammierten oder vorgewählten Leistungsfaktorsollwert hinzuführen, der gewählt werden kann, um die Arbeits-/Betriebsbedingungen im Ofen zu optimieren.

## Patentansprüche

1. Elektrodenkontrollsystem (22) für einen Elektrolichtbogenofen (10), der einen Ofentransformator (20) aufweist, umfassend:
einen Stromtransformator (24) zur Bestimmung des Betriebsstroms der Elektrode (12);
einen Spannungstransformator (26) zur Bestimmung der Betriebsspannung der Elektrode (12);
einen Wirkungsleistungsumformer (28), der für die Berechnung der Wirkleistung der Elektrode (12) in Form eines ersten Ausgabesignals (R₁) aus dem bestimmten Betriebsstrom und der bestimmten Betriebsspannung mit dem Stromtransformator (24) und dem Spannungstransformator (26) verbunden ist;
einen Blindleistungsumformer (30), der für die Berechnung der Blindleistung der Elektrode (12) in Form eines zweiten Ausgabesignals (R₂) aus dem bestimmten Betriebsstrom und der bestimmten Betriebsspannung mit dem Stromtransformator (24) und dem Spannungstransformator (26) verbunden ist;
eine programmierbare Kontrolleinheit (32), die mit dem Wirkleistungsumformer (28) und dem Blindleistungsumformer (30) für den Empfang des ersten und des zweiten Ausgabesignals (R₁, R₂) verbunden ist, wobei die Kontrolleinheit (32) so konfiguriert ist, dass sie den tatsächlichen Leistungsfaktor der Elektrode (12) aus dem ersten und zweiten Ausgabesignal (R₁, R₂) berechnet, den tatsächlichen Leistungsfaktor mit einem vorprogrammierten Leistungsfaktorsollwert vergleicht und ein Kontrollsignal (S₁, S₂, S₃) erzeugt, das den Unterschied zwischen dem tatsächlichen Leistungsfaktor und dem Leistungsfaktorsollwert angibt; und
einen Elektrodenanordnungsmechanismus (18) zur Kontrolle der Bewegung der Elektrode (12), wobei der Elektrodenanordnungsmechanismus mit der Kontrolleinheit (32) für den Empfang des Kontrollsignals (S₁, S₂, S₃) verbunden und so konfiguriert ist, dass er den vertikalen Abstand des Elektrodenendes, aus dem der Lichtbogen austritt, von der Oberfläche des geschmolzenen Metalls in dem Elektrolichtbogenofen so einstellt, dass sich der Leistungsfaktor dem Leistungsfaktorsollwert annähert.

2. Elektrodenkontrollsystem (22) nach Anspruch 1, wobei die Kontrolleinheit (32) eine Leistungsfaktorberechnungseinheit (36) umfasst, die mit dem Wirkleistungsumformer (28) und Blindleistungsumformer (30) für den Empfang des ersten und des zweiten Ausgabesignals (R₂) verbunden ist, und wobei die Leistungsfaktorberechnungseinheit (36) so konfiguriert ist, dass sie den tatsächlichen Leistungsfaktor der Elektrode (12) berechnet und ein drittes Ausgabesignal (R₃) erzeugt wird, das den tatsächlichen Leistungsfaktor der Elektrode angibt.

3. Elektrodenkontrollsystem (22) nach Anspruch 2, wobei die Kontrolleinheit (32) weiter ein Steuergerät (38) umfasst, das mit der Leistungsfaktorberechnungseinheit (36) für den Empfang des dritten Ausgabesignals (R₃) verbunden ist, und wobei das Steuergerät (38) so konfiguriert ist, dass es das dritte Ausgabesignal (R₃) mit dem Leistungsfaktorsollwert vergleicht und das Kontrollsignal für den Elektrodenanordnungsmechanismus (18) erzeugt.

4. Elektrodenkontrollsystem (22) nach Anspruch 1, wobei der Elektrodenanordnungsmechanismus (18) eine elektromechanische Vorrichtung ist, die operativ mit der Elektrode (12) verbunden ist, zur Einstellung des vertikalen Abstandes des Elektrodenendes, aus dem der Lichtbogen austritt, von der Oberfläche des geschmolzenen Metalls, das im Elektrolichtbogenofen (10) enthalten ist.

5. Elektrodenkontrollsystem nach Anspruch 1, wobei der Stromtransformator (24) und der Spannungstransformator (26) an die Sekundärseite des Ofentransformators (20) angeschlossen sind, um den Betriebsstrom und die Betriebsspannung der Elektrode (12) zu bestimmen.

6. Elektrodenkontrollsystem (22) nach Anspruch 1, wobei die programmierbare Kontrolleinheit (32) ein programmierbarer Computer ist.

7. Verfahren zur Kontrolle der Anordnung einer Elektrode (12) in einem Elektrolichtbogenofen (10), der einen Ofentransformator (20) und einen Elektrodenanordnungsmechanismus (18) aufweist, wobei das Verfahren die folgenden Schritte umfasst:
Bestimmung der Wirkleistung der Elektrode (12) aus dem Betriebsstrom und der Betriebsspannung der Elektrode (12);
Bestimmung der Blindleistung der Elektrode (12) aus dem Betriebsstrom und der Betriebsspannung der Elektrode (12);
Berechnung des tatsächlichen Leistungsfaktors der Elektrode (12) aus der Wirkleistung und der Blindleistung der Elektrode (12);
Vergleich des tatsächlichen Leistungsfaktors mit dem vorgewählten Leistungsfaktorsollwert der Elektrode (12);
Bereitstellung eines Kontrollsignals (S₁, S₂, S₃), das den Unterschied zwischen dem tatsächlichen Leistungsfaktor und dem vorgewählten Leistungsfaktorsollwert dem Elektrodenanordnungsmechanismus (18) angibt; und
Einstellen des vertikalen Abstandes des Elektrodenendes, aus dem der Lichtbogen austritt, von der Oberfläche des geschmolzenen Metalls in dem Elektrolichtbogenofen (10) entsprechend dem Kontrollsignal (S₁, S₂, S₃) so, dass der tatsächliche Leistungsfaktor der Elektrode (12) sich dem Leistungsfaktorsollwert annähert.

8. Verfahren nach Anspruch 7, wobei das Verfahren den Schritt der Bestimmung des Betriebsstroms auf der Sekundärseite des Ofentransformators (20) umfasst.

9. Verfahren nach Anspruch 7, wobei das Verfahren den Schritt der Bestimmung der Betriebsspannung auf der Sekundärseite des Ofentransformators (20) umfasst.

10. Verfahren nach Anspruch 7, wobei der Schritt der Berechnung des tatsächlichen Leistungsfaktors der Elektrode (12) in einer programmierbaren Kontrolleinheit (32) stattfindet.

11. Verfahren nach Anspruch 7, wobei der Schritt des Vergleichs des tatsächlichen Leistungsfaktors mit dem vorgewählten Leistungsfaktorsollwert in einer programmierbaren Kontrolleinheit (32) stattfindet.

12. Verfahren nach Anspruch 7, wobei das Kontrollsignal (S₁, S₂, S₃) kontinuierlich ist, so dass der Elektrodenanordnungsmechanismus (18) ständig den vertikalen Abstand des Eletrodenendes, aus dem der Lichtbogen austritt, von der Oberfläche des geschmolzenen Metalls im Elektrolichtbogenofen (10) einstellt.

13. Verfahren nach Anspruch 7, wobei das Verfahren weiterhin den Schritt der Erzeugung eines ersten Ausgabesignals (R₁), das die Wirkleistung der Elektrode (12) angibt, umfasst.

14. Verfahren nach Anspruch 13, wobei das Verfahren weiterhin den Schritt der Erzeugung eines zweiten Ausgabesignals (R₂), das die Blindleistung der Elektrode (12) angibt, umfasst.

15. Verfahren nach Anspruch 10, 13 und 14, wobei das Verfahren weiterhin den Schritt des Empfangs des ersten und des zweiten Ausgabesignals (R₁, R₂) in der programmierbaren Kontrolleinheit (32) für die Berechnung des tatsächlichen Leistungsfaktors der Elektrode (12), umfasst.

16. Verfahren nach Anspruch 15, wobei die Kontrolleinheit (32) eine Leistungsfaktorberechnungseinheit (36) für den Empfang des ersten und des zweiten Ausgabesignals (R₁, R₂) umfasst, und wobei der Schritt der Berechnung des tatsächlichen Leistungsfaktors der Elektrode (12) in der Leistungsfaktorberechnungseinheit (36) erfolgt.

17. Verfahren nach Anspruch 16, wobei das Verfahren weiterhin den Schritt der Erzeugung eines dritten Ausgabesignals (R₃), das den in der Leistungsfaktorberechnungseinheit (36) berechneten tatsächlichen Leistungsfaktor der Elektrode (12) angibt, umfasst.

18. Verfahren nach Anspruch 17, wobei die Kontrolleinheit (32) weiterhin ein Steuergerät (38) umfasst, welches mit der Leistungsfaktorberechnungseinheit (36) für den Empfang des dritten Ausgabesignals (R₃) verbunden ist, und wobei der Schritt des Vergleichs des tatsächlichen Leistungsfaktors mit dem vorgewählten Leistungsfaktorsollwert für die Elektrode (12) im Steuergerät (38) stattfindet, das dann das Kontrollsignal (S₁, S₂, S₃) erzeugt.

19. Verfahren nach Anspruch 18, wobei das Kontrollsignal (S₁, S₂, S₃) kontinuierlich ist, so dass der Elektrodenanordnungsmechanismus (18) ständig den vertikalen Abstand des Elektrodenendes, aus dem der Lichtbogen austritt, von der Oberfläche des geschmolzenen Metalls im Elektrolichtbogenofen (10) einstellt.

20. Elektrodenkontrollsystem (42) zum Regulieren der Anordnung einer Elektrode in einem einen Ofentransformator (20) enthaltenden Elektrolichtbogenofen sowohl auf Basis der Impedanz der Elektrode, als auch auf Basis von deren Leistungsfaktor, umfassend:
einen Stromtransformator (24) zur Bestimmung des Betriebsstroms der Elektrode (12);
einen Spannungstransformator (26) zur Bestimmung der Betriebsspannung der Elektrode (12);
einen Wirkleistungsumformer, der für die Berechnung der Wirkleistung der Elektrode (12) in Form eines ersten Ausgabesignals (R₁) aus dem bestimmten Betriebsstrom und der bestimmten Betriebsspannung mit dem Stromtransformator (24) und dem Spannungstransformator (26) verbunden ist;
einen Bindleistungsumformer (30), der für die Berechnung der Blindleistung der Elektrode (12) in Form eines zweiten Ausgabesignals (R₂) aus dem bestimmten Betriebsstrom und der bestimmten Betriebsspannung mit dem Stromtransformator (24) und dem Spannungstransformator (26) verbunden ist;
eine Elektrodenimpedanzberechnungseinheit (44), die zur Berechnung der Elektrodenimpedanz aus dem bestimmten Betriebsstrom und der bestimmten Betriebsspannung mit dem Stromtransformator (24) über einen Stromumformer und mit dem Spannungstransformator (26) über einen Spannungsumformer verbunden ist;
eine programmierbare Kontrolleinheit (32), die mit dem Wirkleistungsumformer und dem Blindleistungsumformer (30) und weiter mit der Elektrodenimpedanzberechnungseinheit (44) verbunden ist, wobei die Kontrolleinheit (32) so konfiguriert ist, dass sie den tatsächlichen Leistungsfaktor der Elektrode (12) aus dem ersten und zweiten Ausgabesignal (R₁, R₂) berechnet, den tatsächlichen Leistungsfaktor mit einem vorprogrammierten Leistungsfaktorsollwert vergleicht, die Elektrodenimpedanz mit einem vorprogrammierten Impedanzsollwert vergleicht, und ein Kontrollsignal (S₁, S₂, S₃) erzeugt, das den jeweiligen Unterschied entweder zwischen dem tatsächlichen Leistungsfaktor und dem Leistungsfaktorsollwert oder zwischen der Elektrodenimpedanz und dem Impedanzsollwert angibt; und
einen Elektrodenanordnungsmechanismus (18) zur Kontrolle der Bewegung der Elektrode (12), wobei der Elektrodenanordnungsmechanismus (18) für den Empfang des Kontrollsignals (S₁, S₂, S₃) mit der Kontrolleinheit (32) verbunden und so konfiguriert ist, dass er den vertikalen Abstand des Elektrodenendes, aus dem der Lichtbogen austritt, von der Oberfläche des geschmolzenen Metalls in dem Elektrolichtbogenofen ständig so einstellt, dass sich entweder der tatsächliche Leistungsfaktor dem Leistungsfaktorsollwert oder die Elektrodenimpedanz dem Impedanzsollwert annähert.

21. Verfahren zur Kontrolle der Anordnung einer Elektrode (12) in einem Elektrolichtbogenofen (10), der einen Ofentransformator (20) und einen Elektrodenanordnungsmechanismus (18) aufweist, wobei das Verfahren die folgenden Schritte umfasst:
Bestimmung der Wirkleistung der Elektrode (12) aus dem Betriebsstrom und der Betriebsspannung der Elektrode (12);
Bestimmung der Blindleistung der Elektrode (12) aus dem Betriebsstrom und der Betriebsspannung der Elektrode (12);
Berechnung des tatsächlichen Leistungsfaktors der Elektrode (12) aus der Wirkleistung und der Blindleistung der Elektrode (12);
Bestimmung der Elektrodenimpedanz aus dem Betriebsstrom und der Betriebsspannung der Elektrode (12);
Bereitstellung eines Kontrollsignals (S₁, S₂, S₃) für den Elektrodenanordnungsmechanismus (18), das den jeweiligen Unterschied entweder zwischen dem tatsächlichen Leistungsfaktor und einem vorgewählten Leistungsfaktorsollwert oder zwischen der Elektrodenimpedanz und einem vorgewählten Impedanzsollwert angibt; und
Einstellen des vertikalen Abstandes des Elektrodenendes, aus dem der Lichtbogen austritt, von der Oberfläche des geschmolzenen Metalls in dem Elektrolichtbogenofen (10) mit Hilfe des Elektrodenanordnungsmechanismus (18) entsprechend dem Kontrollsignal, (S₁, S₂, S₃) so, dass sich entweder der tatsächliche Leistungsfaktor dem Leistungsfaktorsollwert oder die Elektrodenimpedanz dem Impedanzsollwert annähert.

22. Verfahren nach Anspruch 21, wobei das Verfahren den Schritt der Bestimmung des Betriebsstroms und der Betriebsspannung auf der Sekundärseite des Ofentransformators (20) umfasst.

23. Verfahren nach Anspruch 21, wobei das Kontrollsignal (S₁, S₂, S₃) kontinuierlich ist, so dass der Elektrodenanordnungsmechanismus (18) ständig den vertikalen Abstand des Elektrodenendes, aus dem der Lichtbogen austritt, von der Oberfläche des geschmolzenen Metalls im Elektrolichtbogenofen (10) einstellt.

## Claims

1. An electrode control system (22) for an electric arc furnace (10) with an arc furnace transformer (20), including
a current transformer (24) for determining the operating current of the electrode (12);
a voltage transformer (26) for determining the operating voltage of the electrode (12);
an effective power transducer (28) that is connected to the current transformer (24) and the voltage transformer (26) in order to calculate the effective power of the electrode (12) from the determined operating current and the determined operating voltage in the form of a first output signal (R₁);
a reactive power transducer (30) that is connected the current transformer (24) and the voltage transformer (26) in order to calculate the reactive power of the electrode (12) from the determined operating current and the determined operating voltage in the form of a second output signal (R₂);
a programmable control unit (32) that is connected to the effective power transducer (28) and the reactive power transducer (30) in order to receive the first and second output signals (R₁, R₂), wherein the control unit is configured such that it calculates the actual power factor of the electrode (12) from the first and second output signals (R₁, R₂), compares the actual power factor with a pre-programmed power factor reference value, and generates a control signal (S₁, S₂, S₃) that indicates the difference between the actual power factor and the power factor reference value; and
an electrode positioning mechanism (18) for controlling the movement of the electrode (12), wherein the electrode positioning mechanism (18) is connected to the control unit (32) for receiving the control signal (S₂, S₃), and is configured such that it adjusts the vertical gap between the end of the electrode from which the arc exits and the surface of the molten metal in such manner that the power factor approaches the power factor reference value.

2. The electrode control system (22) as recited in claim 1,wherein the control unit (32) includes a power factor calculation unit (36) that is connected to the effective power transducer (28) and the reactive power transducer (30) in order to receive the first and second output signal (R₂), and wherein the power factor calculation unit (36) is configured such that it calculates the actual power factor of the electrode (12) and a third output signal (R₃) is generated that indicates the actual power factor of the electrode.

3. The electrode control system (22) as recited in claim 2, wherein the control unit (32) further includes a control device (38) that is connected to the power factor calculation unit (36) in order to receive the third output signal (R₃), and wherein the control device (38) is configured such that it compares the third output signal (R₃) with the power factor reference value and generates the control signal for the electrode positioning mechanism (18).

4. The electrode control system (22) as recited in claim 1, wherein the electrode positioning mechanism (18) is an electromechanical device that is functionally connected to the electrode (12) in order to adjust the vertical distance between the electrode end from the which the arc exits and the surface of the molten metal that is contained in the electric arc furnace (10).

5. The electrode control system as recited in claim 1, wherein the current transformer (24) and the voltage transformer (26) are connected to the secondary side of the furnace transformer (20) in order to determine the operating current and the operating voltage of the electrode (12).

6. The electrode control system (22) as recited in claim 1, wherein the programmable control unit (32) is a programmable computer.

7. A method for controlling the position of an electrode (12) in an electric arc furnace (10) that includes a furnace transformer (20) and an electrode positioning mechanism (18), wherein the method includes the following steps:
determining the effective power of the electrode (12) from the operating current and the operating voltage of the electrode (12);
determining the reactive power of the electrode (12) from the operating current and the operating voltage of the electrode (12);
calculating the actual power factor of the electrode (12) from the effective power and the reactive power of the electrode (12);
comparing the actual power factor with the preselected power factor reference value of the electrode (12);
supplying a control signal (S₁, S₂, S₃) that indicates the difference between the actual power factor and the preselected power factor reference value to the electrode positioning mechanism (18), and
adjusting the vertical distance between the electrode end from which the arc exits and the surface of the molten metal in the electric arc furnace (10) corresponding to the control signal (S₁, S₂, S₃) such that the actual power factor of the electrode approaches the power factor reference value.

8. The method as recited in claim 7, wherein the method includes the step of determining the operating current on the secondary side of the furnace transformer (20).

9. The method as recited in claim 7, wherein the method includes the step of determining the operating voltage on the secondary side of the furnace transformer (20).

10. The method as recited in claim 7, wherein the step of calculating the actual power factor of the electrode (12) is performed in a programmable control unit (32).

11. The method as recited in claim 7, wherein the step of comparing the actual power factor with the preselected power factor reference value is performed in a programmable control unit (32).

12. The method as recited in claim 7, wherein the control signal (S₁, S₂, S₃) is continuous, so that the electrode positioning mechanism (18) constantly adjusts the vertical distance between the electrode end from which the arc exits and the surface of the molten metal in the electric arc furnace (10).

13. The method as recited in claim 7, wherein the method further includes the step of generating a first output signal (R₁), which indicates the effective power of the electrode (12).

14. The method as recited in claim 13, wherein the method further includes the step of generating a second output signal (R₂), which indicates the reactive power of the electrode (12).

15. The method as recited in claims 10, 13 and 14, wherein the method further includes the step of receiving the first and second output signals (R₁, R₂) in the programmable control unit (32) in order to calculate the actual power factor of the electrode (12).

16. The method as recited in claim 15, wherein the control unit (32) includes a power factor calculation unit (36) for receiving the first and second output signals (R₁, R₂), and wherein the step of calculating the actual power factor of the electrode (12) takes place in the power factor calculation unit (36).

17. The method as recited in claim 16, wherein the method further includes the step of .generating a third output signal (R₃), which indicates the actual power factor of the electrode (12), as calculated in the power factor calculation unit (36).

18. The method as recited in claim 17, wherein the control unit (32) further includes a control device (38) that is connected to the power factor calculation unit (36) in order to receive the third output signal (R₃), and wherein the step of comparing the actual power factor with the preselected power factor reference value for the electrode (12) takes place in the control device (38), which then generates the control signal (S₁, S₂, S₃).

19. The method as recited in claim 18, wherein the control signal (S₁, S₂, S₃) is continuous, so that the electrode positioning mechanism (18) constantly adjusts the vertical distance between the electrode end from which the arc exits and the surface of the molten metal in the electric arc furnace (10).

20. An electrode control system (42) for regulating the position of an electrode in an electric arc furnace containing an arc furnace transformer, both on the basis of the impedance of the electrode and on the basis of its power factor, including:
a current transformer (24) for determining the operating current of the electrode (12);
a voltage transformer (26) for determining the operating voltage of the electrode (12);
an effective power transducer that is connected to the current transformer (24) and the voltage transformer (26) in order to calculate the effective power of the electrode (12) from the determined operating current and the determined operating voltage in the form of a first output signal (R₁);
a reactive power transducer (30) that is connected the current transformer (24) and the voltage transformer (26) in order to calculate the reactive power of the electrode (12) from the determined operating current and the determined operating voltage in the form of a second output signal (R₂);
an electrode impedance calculation unit (44) that is connected to the current transformer (24) via a current transducer and to the voltage transformer (26) via a voltage transducer in order to calculate the electrode impedance from the determined operating current and the determined operating voltage;
a programmable control unit (32) that is connected to the effective power transducer and the reactive power transducer, and also with the electrode impedance calculation unit (44) wherein the control unit (32) is configured such that it calculates the actual power factor of the electrode (12) from the first and second output signals (R₁, R₂), compares the actual power factor with a pre-programmed power factor reference value, compares the electrode impedance with a pre-programmed impedance reference value, and generates a control signal (S₁, S₂, S₃) that indicates the respective difference either between the actual power factor and the power factor reference value or between the electrode impedance and the impedance reference value; and
an electrode positioning mechanism (18) for controlling the movement of the electrode (12), wherein the electrode positioning mechanism (18) is connected to the control unit (32) for receiving the control signal (S₁, S₂, S₃), and is configured such that it continuously adjusts the vertical gap between the end of the electrode from which the arc exits and the surface of the molten metal in the electric arc furnace in such manner that either the actual power factor approaches the power factor reference value or the electrode impedance approaches the impedance reference value.

21. An method for controlling the position of an electrode (12) in an electric arc furnace (10), including an arc furnace transformer 20) and an electrode positioning mechanism (18), wherein the method includes the following steps:
determining the effective power of the electrode (12) from the operating current and the operating voltage of the electrode (12);
determining the reactive power of the electrode (12) from the operating current and the operating voltage of the electrode (12);
calculating the actual of the electrode (12) from the effective power and the reactive power of the electrode (12);
determining the electrode impedance from the operating current and the operating voltage of the electrode (12);
supplying a control signal (S₁, S₂, S₃) for the electrode positioning mechanism (18) that indicates the respective difference either between the actual power factor and the preselected power factor reference value or between the electrode impedance and a preselected impedance reference value; and
adjusting the vertical distance between the electrode end from which the arc exits and the surface of the molten metal in the electric arc furnace (10) via the electrode positioning mechanism (18) in accordance with the control signal (S₁, S₂, S₃) such that either the actual power factor of the electrode approaches the power factor reference value or the electrode impedance approaches the impedance reference value.

22. The method as recited in claim 21, wherein the method includes the step of determining the operating current and the operating voltage on the secondary side of the furnace transformer (20).

23. The method as recited in claim 21, wherein the control signal (S₁, S₂, S₃) is continuous, so that the electrode positioning mechanism (18) constantly adjusts the vertical distance between the electrode end from which the arc exits and the surface of the molten metal in the electric arc furnace (10).

## Revendications

1. Système de contrôle d'électrode (22) pour un four à arc (10) muni d'un transformateur de four (20), comprenant :
un transformateur de courant (24) pour la détermination du courant de fonctionnement de l'électrode (12) ;
un transformateur de tension (26) pour la détermination de la tension de fonctionnement de l'électrode (12) ;
un convertisseur de puissance utile (28) relié au transformateur de courant (24) et au transformateur de tension (26) pour le calcul de la puissance utile de l'électrode (12) sous la forme d'un premier signal de sortie (R₁) à partir du courant de fonctionnement déterminé et de la tension de fonctionnement déterminée ;
un convertisseur de puissance réactive (30) relié au transformateur de courant (24) et au transformateur de tension (26) pour le calcul de la puissance réactive de l'électrode (12) sous la forme d'un deuxième signal de sortie (R₂) à partir du courant de fonctionnement déterminé et de la tension de fonctionnement déterminée ;
une unité de commande programmable (32) reliée au convertisseur de puissance utile (28) et au convertisseur de puissance réactive (30) pour la réception du premier et du deuxième signal de sortie (R₁, R₂), l'unité de commande (32) étant configurée de sorte à calculer le facteur de puissance réel de l'électrode (12) à partir du premier et du deuxième signal de sortie (R₁, R₂), à comparer le facteur de puissance réel avec une valeur de consigne préprogrammée du facteur de puissance et à générer un signal de commande (S₁, S₂, S₃) indiquant la différence entre le facteur de puissance réel et la valeur de consigne du facteur de puissance ; et
un mécanisme de positionnement (18) de l'électrode pour le contrôle du déplacement de l'électrode (12), le mécanisme de positionnement de l'électrode étant relié à l'unité de commande (32) pour la réception du signal de commande (S₁, S₂, S₃) et étant configuré de sorte à régler, dans le four à arc, la distance verticale entre l'extrémité de l'électrode, de laquelle jaillit l'arc électrique, et la surface du métal en fusion de telle sorte que le facteur de puissance s'approche de la valeur de consigne du facteur de puissance.

2. Système de contrôle d'électrode (22) selon la revendication 1, l'unité de commande (32) comprenant une unité de calcul du facteur de puissance (36) reliée au convertisseur de puissance utile (28) et au convertisseur de puissance réactive (30) pour la réception du premier et du deuxième signal de sortie (R₂), l'unité de calcul du facteur de puissance (36) étant configurée de sorte qu'elle calcule le facteur de puissance réel de l'électrode (12) et qu'un troisième signal de sortie (R₃), indiquant le facteur de puissance réel de l'électrode, soit généré.

3. Système de contrôle d'électrode (22) selon la revendication 2, l'unité de commande (32) comprenant en outre un dispositif de commande (38) relié à l'unité de calcul du facteur de puissance (36) pour la réception du troisième signal de sortie (R₃), le dispositif de commande (38) étant configuré de sorte à comparer le troisième signal de sortie (R₃) avec la valeur de consigne du facteur de puissance et à générer le signal de commande pour le mécanisme de positionnement (18) de l'électrode.

4. Système de contrôle d'électrode (22) selon la revendication 1, le mécanisme de positionnement (18) de l'électrode étant un dispositif électromécanique relié de manière opérationnelle avec l'électrode (12), pour régler la distance verticale entre l'extrémité de l'électrode, de laquelle jaillit l'arc électrique, et la surface du métal en fusion contenu dans le four à arc (10).

5. Système de contrôle d'électrode selon la revendication 1, le transformateur de courant (24) et le transformateur de tension (26) étant reliés au côté secondaire du transformateur de four (20) afin de déterminer le courant de fonctionnement et la tension de fonctionnement de l'électrode (12).

6. Système de contrôle d'électrode (22) selon la revendication 1, l'unité de commande programmable (32) étant un ordinateur programmable.

7. Procédé pour la commande du positionnement d'une électrode (12) dans un four à arc (10) muni d'un transformateur de four (20) et d'un mécanisme de positionnement (18) de l'électrode, le procédé comprenant les étapes suivantes :
détermination de la puissance utile de l'électrode (12) à partir du courant de fonctionnement et de la tension de fonctionnement de l'électrode (12) ;
détermination de la puissance réactive de l'électrode (12) à partir du courant de fonctionnement et de la tension de fonctionnement de l'électrode (12) ;
calcul du facteur de puissance réel de l'électrode (12) à partir de la puissance utile et de la puissance réactive de l'électrode ;
comparaison du facteur de puissance réel avec la valeur de consigne présélectionnée du facteur de puissance de l'électrode (12) ;
fourniture d'un signal de commande (S₁, S₂, S₃) indiquant au mécanisme de positionnement (18) de l'électrode la différence entre le facteur de puissance réel et la valeur de consigne présélectionnée du facteur de puissance ; et
réglage de la distance verticale entre l'extrémité de l'électrode, de laquelle jaillit l'arc électrique, et la surface du métal en fusion dans le four à arc (10) en fonction du signal de commande (S₁, S₂, S₃) de sorte que le facteur de puissance réel de l'électrode (12) s'approche de la valeur de consigne du facteur de puissance.

8. Procédé selon la revendication 7, le procédé comprenant l'étape de la détermination du courant de fonctionnement sur le côté secondaire du transformateur de four (20).

9. Procédé selon la revendication 7, le procédé comprenant l'étape de la détermination de la tension de fonctionnement sur le côté secondaire du transformateur de four (20).

10. Procédé selon la revendication 7, l'étape du calcul du facteur de puissance réel de l'électrode (12) étant exécutée dans une unité de commande programmable (32).

11. Procédé selon la revendication 7, l'étape de la comparaison du facteur de puissance réel avec la valeur de consigne présélectionnée du facteur de puissance étant exécutée dans une unité de commande programmable (32).

12. Procédé selon la revendication 7, le signal de commande (S₁, S₂, S₃) étant continu, de sorte que le mécanisme de positionnement (18) de l'électrode règle en permanence la distance verticale entre l'extrémité de l'électrode, de laquelle jaillit l'arc électrique, et la surface du métal en fusion dans le four à arc (10).

13. Procédé selon la revendication 7, le procédé comprenant en outre l'étape de la génération d'un premier signal de sortie (R₁) indiquant la puissance utile de l'électrode (12).

14. Procédé selon la revendication 13, le procédé comprenant en outre l'étape de la génération d'un deuxième signal de sortie (R₂) indiquant la puissance réactive de l'électrode (12).

15. Procédé selon les revendications 10, 13 et 14, le procédé comprenant en outre l'étape de la réception du premier et du deuxième signal de sortie (R₁, R₂) dans l'unité de commande programmable (32) pour le calcul du facteur de puissance réel de l'électrode (12).

16. Procédé selon la revendication 15, l'unité de commande (32) comprenant une unité de calcul du facteur de puissance (36) pour la réception du premier et du deuxième signal de sortie (R₁, R₂), et l'étape du calcul du facteur de puissance réel de l'électrode (12) s'effectuant dans l'unité de calcul du facteur de puissance (36).

17. Procédé selon la revendication 16, le procédé comprenant en outre l'étape de la génération d'un troisième signal de sortie (R₃) indiquant le facteur de puissance réel de l'électrode (12) calculé par l'unité de calcul du facteur de puissance (36).

18. Procédé selon la revendication 17, l'unité de commande (32) comprenant en outre un dispositif de commande (38) relié à l'unité de calcul du facteur de puissance (36) pour la réception du troisième signal de sortie (R₃), et l'étape de la comparaison du facteur de puissance réel avec la valeur de consigne présélectionnée du facteur de puissance de l'électrode (12) s'effectuant dans le dispositif de commande (38), qui génère alors le signal de commande (S₁, S₂, S₃).

19. Procédé selon la revendication 18, le signal de commande (S₁, S₂, S₃) étant continu, de sorte que le mécanisme de positionnement (18) de l'électrode règle en permanence la distance verticale entre l'extrémité de l'électrode, de laquelle jaillit l'arc électrique, et la surface du métal en fusion dans le four à arc (10).

20. Système de contrôle d'électrode (42) pour la régulation de la position d'une électrode dans un four à arc muni d'un transformateur de four (20) tant sur la base de l'impédance de l'électrode que sur la base du facteur de puissance de celle-ci, comprenant :
un transformateur de courant (24) pour la détermination du courant de fonctionnement de l'électrode (12) ;
un transformateur de tension (26) pour la
détermination de la tension de fonctionnement de l'électrode (12) ;
un convertisseur de puissance utile relié au transformateur de courant (24) et au transformateur de tension (26) pour le calcul de la puissance utile de l'électrode (12) sous la forme d'un premier signal de sortie (R₁) à partir du courant de fonctionnement déterminé et de la tension de fonctionnement déterminée ;
un convertisseur de puissance réactive (30) relié au transformateur de courant (24) et au transformateur de tension (26) pour le calcul de la puissance réactive de l'électrode (12) sous la forme d'un deuxième signal de sortie (R₂) à partir du courant de fonctionnement déterminé et de la tension de fonctionnement déterminée ;
une unité de calcul de l'impédance de l'électrode (44) reliée au transformateur de courant (24) par le biais d'un convertisseur de courant et au transformateur de tension (26) par le biais d'un convertisseur de tension pour le calcul de l'impédance de l'électrode à partir du courant de fonctionnement déterminé et de la tension de fonctionnement déterminée ;
une unité de commande programmable (32) reliée au convertisseur de puissance utile et au convertisseur de puissance réactive (30), ainsi qu'à l'unité de calcul de l'impédance de l'électrode (44), l'unité de commande (32) étant configurée de sorte à calculer le facteur de puissance réel de l'électrode (12) à partir du premier et du deuxième signal de sortie (R₁, R₂), à comparer le facteur de puissance réel avec une valeur de consigne préprogrammée du facteur de puissance, à comparer l'impédance de l'électrode avec une valeur de consigne préprogrammée de l'impédance, et à générer un signal de commande (S₁, S₂, S₃) indiquant respectivement soit la différence entre le facteur de puissance réel et la valeur de consigne du facteur de puissance soit la différence entre l'impédance de l'électrode et la valeur de consigne de l'impédance ; et
un mécanisme de positionnement (18) de l'électrode pour le contrôle du déplacement de l'électrode (12), le mécanisme de positionnement de l'électrode étant relié à l'unité de commande (32) pour la réception du signal de commande (S₁, S₂, S₃) et étant configuré de sorte à régler en permanence dans le four à arc la distance verticale entre l'extrémité de l'électrode, de laquelle jaillit l'arc électrique, et la surface du métal en fusion de telle sorte que soit le facteur de puissance réel s'approche de la valeur de consigne du facteur de puissance, soit l'impédance de l'électrode s'approche de la valeur de consigne de l'impédance.

21. Procédé pour la commande du positionnement d'une électrode (12) dans un four à arc (10) muni d'un transformateur de four (20) et d'un mécanisme de positionnement (18) de l'électrode, le procédé comprenant les étapes suivantes :
détermination de la puissance utile de l'électrode (12) à partir du courant de fonctionnement et de la tension de fonctionnement de l'électrode (12) ;
détermination de la puissance réactive de l'électrode (12) à partir du courant de fonctionnement et de la tension de fonctionnement de l'électrode (12) ;
calcul du facteur de puissance réel de l'électrode (12) à partir de la puissance utile et de la puissance réactive de l'électrode (12) ;
détermination de l'impédance de l'électrode à partir du courant de fonctionnement et de la tension de fonctionnement de l'électrode (12) ;
fourniture d'un signal de commande (S₁, S₂, S₃) au mécanisme de positionnement (18) de l'électrode, indiquant respectivement la différence soit entre le facteur de puissance réel et une valeur de consigne présélectionnée du facteur de puissance soit entre l'impédance de l'électrode et une valeur de consigne présélectionnée de l'impédance ; et
réglage de la distance verticale entre l'extrémité de l'électrode, de laquelle jaillit l'arc électrique, et la surface du métal en fusion dans le four à arc (10) à l'aide du mécanisme de positionnement (18) de l'électrode en fonction du signal de commande (S₁, S₂, S₃) de sorte que soit le facteur de puissance réel de l'électrode (12) s'approche de la valeur de consigne du facteur de puissance soit l'impédance de l'électrode s'approche de la valeur de consigne de l'impédance.

22. Procédé selon la revendication 21, le procédé comprenant l'étape de la détermination du courant de fonctionnement et de la tension de fonctionnement sur le côté secondaire du transformateur de four (20).

23. Procédé selon la revendication 21, le signal de commande (S₁, S₂, S₃) étant continu, de sorte que le mécanisme de positionnement (18) de l'électrode règle en permanence la distance verticale entre l'extrémité de l'électrode, de laquelle jaillit l'arc électrique, et la surface du métal en fusion dans le four à arc (10).
